# EUROPEAN PATENT APPLICATION

(11) **EP 4 852 431 A1**
(43) Date of publication of application: **09.12.2026**
(21) Application number: 25305822.6
(22) Date of filing: 05.06.2025
(51) Int. Cl.: H04N 19/52, H04N 19/593

(54) **HISTORY-BASED LIST USAGE MODIFICATION AND IMPROVEMENTS**

(71) Applicant: InterDigital CE Patent Holdings, SAS, 75017 Paris (FR)
(72) Inventor: RADOSAVLJEVIC, Milos, 35000 Rennes (FR); LE LEANNEC, Fabrice, 35830 Betton (FR); NASER, Karam, 35250 Mouaze (FR); DUMAS, Thierry, 35700 Rennes (FR)
(74) Representative: Vossius & Partner Patentanwälte Rechtsanwälte mbB

(57) **Abstract**

Systems, methods, and devices disclosed herein are related to history-based usage modification and improvements. A device may include a processor. The device may be configured to generate a history-based list based on a plurality of coding vectors. The device may select a coding vector from the plurality of coding vectors to be added to a merge candidate list. The coding vector may be an earliest-added coding vector in the history-based list. The device may construct a merge candidate list based at least on the selected coding vector from the history-based list. The device may select at least one coding vector from the merge candidate list. The device may decode a current block based on the selected at least one coding vector from the merge candidate list.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and devices disclosed herein are related to history-based usage modification and improvements. A device may include a processor. The device may be configured to generate a history-based list based on a plurality of coding vectors. The device may select a coding vector from the plurality of coding vectors to be added to a merge candidate list. The coding vector may be an earliest-added coding vector in the history-based list. The device may construct a merge candidate list based at least on the selected coding vector from the history-based list. The device may select at least one coding vector from the merge candidate list. The device may decode a current block based on the selected at least one coding vector from the merge candidate list.

The device may include one or more features. For example, the plurality of coding vectors may include at least one of a motion vector (MV) or a block vector (BV). The plurality of coding vectors may be derived from at least one of an intra-block copy (IBC), an intra-template matching prediction (ITMP), a decoder-side intra mode derivation (DIMD), a spatial geometric partition mode (SGPM), an advanced motion vector prediction (AMVP), a chained motion vector prediction (CMVP), a spatial motion vector predictor (SMVP), or a temporal motion vector predictor (TMVP). The device may select a subset of coding vectors from the plurality of coding vectors. The subset of coding vectors may include the coding vector. The device may construct the merge candidate list by storing the subset of coding vectors first in the merge candidate list. The merge candidate list may include a spatial adjacent candidate, a spatial non-adjacent candidate, or a history based temporal candidate. The merge candidate list may be constructed further based on at least one of: spatial adjacent coding candidates, temporal coding candidates, spatial non-adjacent coding candidates, or shifted temporal coding candidates. The merge candidate list may be constructed based on the coding vector being tested first. The merge candidate list may include the coding vector. The coding vector may diversify the merge candidate list.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates an example of an intra template search area that may be used for an intra template matching prediction mode.
FIG. 5 illustrates an example of a sparse search and/or refinement operation during in intra template matching prediction search.
FIG. 6 illustrates an example of a history-based list utilized as a first-in-first-out (FIFO) list and a last-in-first-out (LIFO) list.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

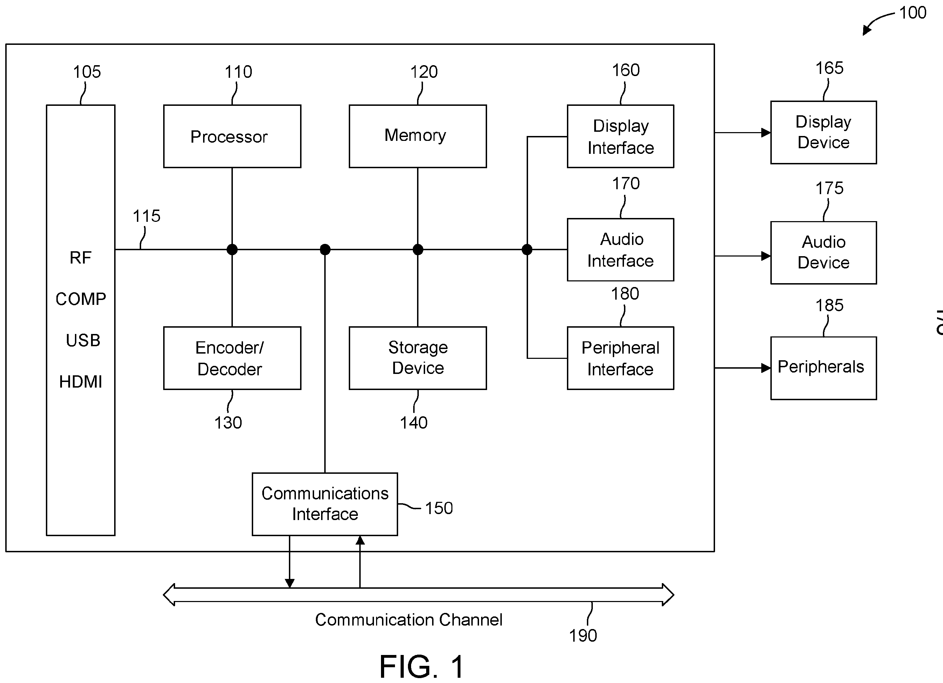

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

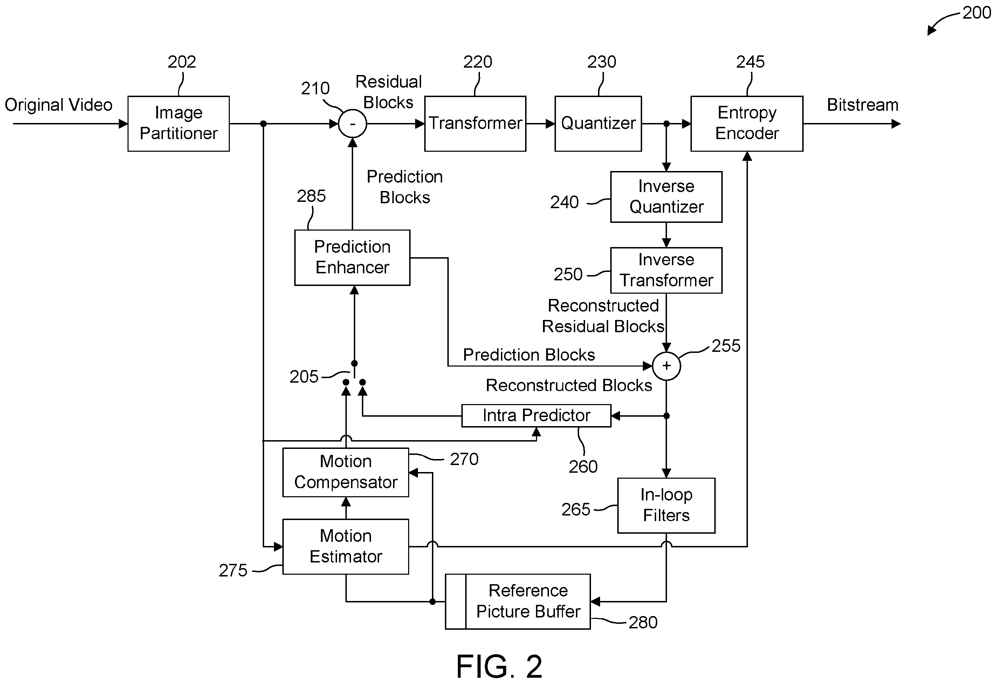

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

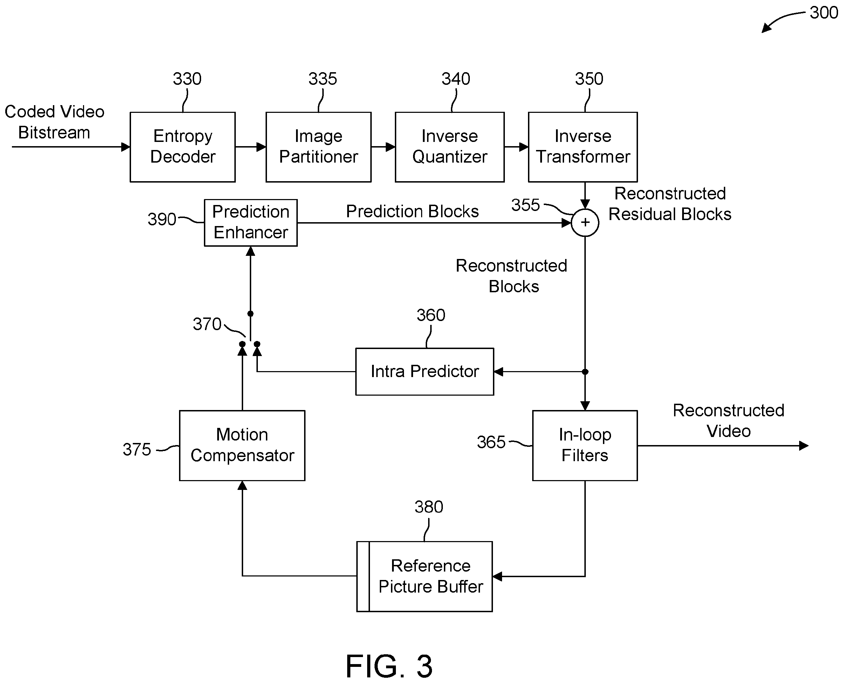

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y,* and chroma components, *U* and *V* (also denoted herein by *C*, *Cb, Cr*)*.*

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

**In** general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

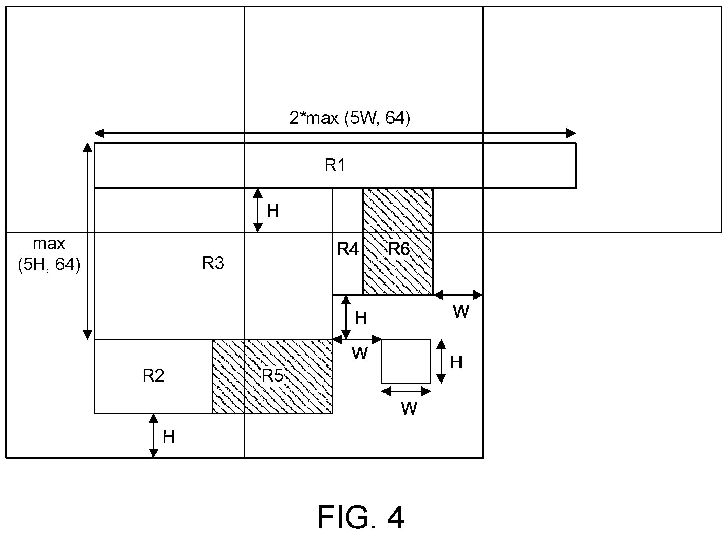

FIG. 4 illustrates an example of an intra template search area that may be used for an intra template matching prediction (ITMP) mode. ITMP mode may be described herein.

ITMP may copy the an optimal (e.g., best) prediction block from the reconstructed part of the current frame (e.g., whose L-shaped template matches the current template). For a (e.g., predefined) search range, a device (e.g., the encoder) may search for a similar template to the current template in a reconstructed part of the current frame and/or use the corresponding block as a prediction block. The device (e.g., the encoder) may signal the usage of ITMP mode, and/or the same prediction operation may be performed at the decoder side.

The prediction signal may be generated by matching the L-shaped, top-only, or left-only causal neighbor of the current block with a (e.g., another) block in a search area as described with reference to FIG. 4. There may be six (e.g., predefined) search areas, e.g., R1 to R6 in FIG. 4, that include the reconstructed samples from the top and/or left CTUs as well as part of the reconstructed samples within the current CTU that are located above, left, bottom-left and/or top-right to the current block.

A sum of absolute differences (SAD) may be used as a cost function.

A search order of the six regions may be utilized, e.g., R4, R5, R6, R1, R2, and/or R3. The decoder may construct a candidate list of one or more (e.g., up to 19) template matching block vectors (BVs) that are ranked in ascending order based on the template cost. One or more modes may be supported including a single predictor, a fusion of multiple predictors, a sub-pel precision, and/or a linear filter model.

In single predictor for example, a predictor (e.g., a single predictor) may be selected from the candidate list.

In fusion of multiple predictors, multiple predictors may be blended to derive the final prediction block. The blending weights may be either computed from the template matching cost of a (e.g., each) predictor, or with a Wiener-filter based weight derivation operation.

In sub-pel precision, if/when a single predictor is used, sub-pel precisions may be supported. A (e.g., new) candidate list may be constructed by including the selected integer block vector and/or surrounding 1/2-pel and 1/4-pel sub-pel positions. The list may be sorted based on a cost function (e.g., the same cost function) used for the integer BV search. At least two (e.g., the first two) candidates may be allowed to be selected with a (e.g., one single) flag being signaled from a device (e.g., encoder to decoder).

In a linear filter model, a linear filter may be learned between the reference template and a current template, and the linear model may be applied to reference block. A linear filter model mode may be used for a single predictor if/when sub-pel precision is not used.

ITMP may be extended to one or more modes, including local illumination compensation (LIC) (e.g., ITMP-LIC), decoder-side intra mode derivation (DIMD) (e.g., ITMP-DIMD), and/or spatial geometric partition mode (SGPM) (e.g., ITMP-SGPM).

ITMP may be extended to template-based intra mode derivation (TIMD) (e.g., ITMP-TIMD).

ITMP with LIC may be described herein and/or the following may be provided.

A usages of LIC and FLM (e.g., CCCM-like filtering) may be mutually exclusive for a CU.

A usages of LIC together with fusion in ITMP may be allowed.

Top-only and/or a left-only template usage for LIC model determination may be allowed for screen content coding. For camera-captured coding, the top-left template may be employed.

A multi-mode linear model (MMLM) may be supported similarly to intra-block copy (IBC)-LIC (e.g., for screen content coding).

When LIC is used for a CU, the ITMP search process may employ mean-removed SAD (MRSAD) rather than a SAD distortion function. If/when LIC is used for a CU in the ITMP search process, the position of the pixel at the top-left of a (e.g., each) candidate reconstructed block may be shifted by half the search sampling factor vertically and/or horizontally with respect to the associated position in the non-LIC example. For a candidate reconstructed block with top-left pixel having shifted position, if the horizontal and/or vertical shift causes a candidate reconstructed block to go out of the bounds of the ITMP search region, the horizontal and/or vertical shift may be canceled.

The dimensions of one or more (e.g., all) regions (e.g., SearchRange_w, SearchRange_h) may be set proportional to the block dimension (e.g., BlkW, BlkH) to include a fixed number of SAD comparisons per pixel. For example: $SearchRange_w = min \left(64,a*BlkW\right)$ $SearchRange_h = min \left(64,a*BlkH\right)$

Where 'a' may be a constant that controls the gain and/or complexity trade-off. In examples, 'a' may be equal to 5.

The complexity of ITMP may be proportional to the template matching process, where the difference between the templates of the current block and of the predicted block may be computed for a (e.g., each) position (e.g., a BV candidate) within the available search range. To speed-up the template matching process, the search range of a (e.g., all) search regions may be subsampled (e.g., by a factor of 3). The search may be called a sparse search. A third position in the horizontal and/or vertical direction may be tested in the first operation. Tested positions (e.g., BVs) in a sparse search may be referred to as sparse BV candidates or sparse candidates. After a first operation (e.g., a sparse search) is finished (e.g., all positions/candidates within the sparse search are tested and their template cost is calculated), a refinement process may be performed. The refinement may be performed via a second template matching search around the (e.g., several) optimal (e.g., best) candidates from the previous operation (e.g., the sparse search) with a reduced range.

Multi-candidate ITMP technique may be used for coding.

In multi-candidate ITMP, a candidate list may be constructed with the candidate BVs ranked in ascending order of their template matching costs, and/or the index of selected candidates may be signaled in the bit-stream. Candidate list construction and/or ranking BVs in ascending order based on their template matching costs may be performed as described herein (e.g., a sparse operation and/or refinement operation are utilized).

ITMP may select a (e.g., only one) candidate (e.g., one BV which includes the smallest template matching cost). A process may be performed on a device (e.g., the encoder and decoder side), and no additional signaling may be provided (e.g., no additional signaling may be required) to indicate the final predictor. In camera captured content, a device (e.g., the decoder) may not find a match. There may be (e.g., several) blocks that are similar to the current block and their template matching cost may be close. The BV candidate with the smallest template matching cost may not be the optimal (e.g., best) predictor.

One or more (e.g., multiple) candidates for ITMP may be used. A candidate list may be constructed and/or the candidate BVs may be ranked in ascending order based on their template matching costs. An index may be signaled in the bitstream to indicate which candidate BVs from the (e.g., final) list may be used for the current block.

ITMP may use template matching to select a shortlist of candidates from a number of BVs (e.g., from large number of possible BVs) and may allow a device (e.g., the encoder, who may include the original current block), to make the (e.g., final) decision.

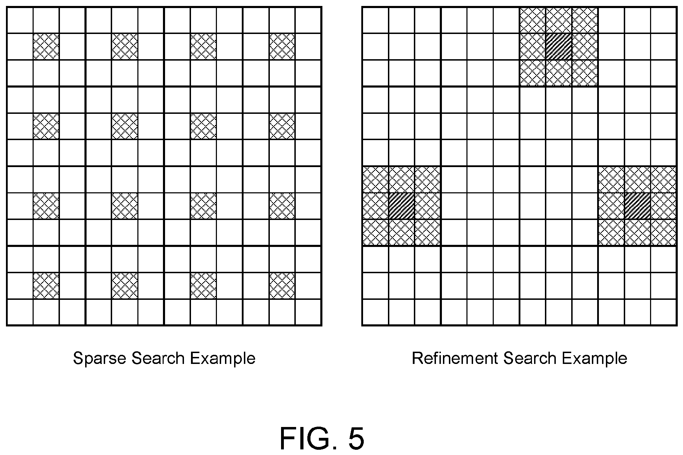

To generate a candidate list, a sparse search and/or a refinement search may be used as illustrated in FIG. 5. In a sparse search, the sub-sampling factor may be three (e.g., every third position in horizontal and/or vertical directions may be tested) in a first operation (e.g., a sparse search) and/or one or more BVs (e.g., the top 30 BVs) may be maintained based on their template matching cost. In the refinement search, a (e.g., each) 3x3 block around a BV (e.g., each of the 30 BVs) may be tested. One or more BVs (e.g., the top 19 BVs) after refinement may be selected to form the final candidate list. A candidate (e.g., one out of 19 final candidates) may be selected as a final predictor by the device (e.g., by the encoder) and/or its index may be signaled (e.g., to the decoder). FIG. 5 illustrates an example of a sparse search and/or refinement operation during in intra template matching prediction search. Sparse search and/or a refinement operation in ITMP search process may be provided herein.

In addition to the (e.g., regular) BV candidates from the surrounding reconstructed area, a BV search operation may include one or more candidates. Candidates may be (e.g., already) selected candidates from the neighboring blocks, auto relocated block vector prediction (AR-BVP) candidates, and/or history-based motion prediction (HMVP) candidates. Adding candidates to the BV search process may increase diversity of the candidates which may lead to the improved performance (e.g., coding gains and/or the like).

Neighboring BV candidates and ITMP with merge candidates may be used.

Candidates may be added to an ITMP search operation by utilizing BVs of surrounding blocks. The reference positions pointed by the block vectors of the adjacent and/or non-adjacent merge candidates may be used as BV candidates (e.g., additional BV candidates beyond the default search areas).

In ITMP mode, a template matching search operation within pre-defined search regions may be performed to obtain candidate BVs (e.g., up to 19 candidate BVs). The ITMP search may be augmented with additional candidates (e.g., block vectors of neighboring partitioning units (PUs)). A (e.g., new) candidate may be called a merge BV candidate or a merge candidate. An ITMP search may be augmented with BVs from (e.g., several) prediction modes that utilize BVs. Prediction modes may include IBC, ITMP, SGPM, TIMD, and/or DIMD modes. ITMP may be augmented with BVs from one or more modes. The merge candidates may include local and/or non-local neighboring candidates. If/when a BV is found within the local or non-local neighborhood of the current PU, the BV may be added to the merge candidates. Adding the BV to the merge candidates may improve the ITMP by (e.g., further) including probable candidates during the ITMP search operation.

In an ITMP mode that uses sparse search and/or refinement, a BV coming from ITMP sparse search and/or refinement may be tested, and/or BVs may come from outside an ITMP search range (e.g., outside the search range depicted in FIG. 4).

Using information of neighboring PUs when performing the template matching search for ITMP may provide improved performance. A template matching cost (e.g., the same template matching cost) operation to rank the (e.g., new) candidates among (e.g., already) computed candidates including candidates from the sparse search may be used. A template cost may be obtained (e.g., in a similar operation as for other candidates, for example, the same as for the sparse candidates). Merge candidates may be ranked together with other (e.g., sparse) candidates based on their template matching cost. Candidates (e.g., top 30 candidates) may be selected for (e.g., further) refinement. By using merge candidates, the candidates (e.g., top 30 candidates) may include candidates that are not part of the sparse search grid (e.g., note, prior to selecting the top 30 candidates, there may be (e.g., only) sparse candidates).

Candidates (e.g., the top 30 candidates) may be refined with a second template matching operation (e.g., refinement operation).

One or more (e.g., all) candidates that are tested in a refinement operation may be ranked based on TM cost and/or the final candidates (e.g., the final 19) may be selected after refinement. A candidate (e.g., one out of 19) may be selected by a device (e.g., the encoder) and/or its index may be signaled.

Examples described herein may enrich the ITMP candidates with (e.g., new) BVs that are not previously tested by an ITMP operation. For example, ITMP candidates with BVs that are not previously tested by an ITMP operation may exist because the ITMP candidates include IBC block vectors, with search region(s) larger than ITMP one, and/or because the ITMP candidates include candidates that are not part of the sparse search candidates. The added BVs may be correlated with the current block statistics as the BVs were selected (e.g., previously) for predicting nearby blocks.

Adding (e.g., more) BV candidates may increase the performance of ITMP mode. Increasing the number of (e.g., additional) candidates by adding AR-BVP candidates or BV candidates from an HMVP list to the BV merge candidates may be described herein.

AR-BVP may be used for coding.

AR-BVP may be introduced into BV merge candidate construction. AR-BVP may be derived as a guiding BV plus a BV of a reference block, located by the guiding BV. A first (e.g., the initial) guiding BV may be set to be an existing BV that is (e.g., already) a merge candidate. In examples, AR-BVP candidates (e.g., up to 20 AR-BVP candidates) may be constructed to obtain (e.g., more) merge candidates. AR-BVP may be performed after (e.g., all) merge candidates are collected from neighboring blocks, and/or after AR-BVP candidates are added on top of existing merge candidates.

In examples, up to 20 AR-BVPs may be constructed (e.g., in examples more or less AR-BVP's may be constructed and/or a limitation may be imposed to reduce complexity).

A template matching cost may be used to compare the merge positions (e.g., including candidates constructed by using an AR-BVP operation) and the defaults merge positions.

The AR-BVP based on the sparse candidates may be used instead of (e.g., or in addition to) AR-BVP based on the merged candidates. The BV candidates derived from the sparse candidates may be used as guiding BVs to construct AR-BVPs by adding the BVs of the reference blocks.

The AR-BVP candidates may be added to the merge candidates.

AR-BVP candidates may be added to the IBC merge and/or advanced motion vector position (AMVP) candidates after the HMVP candidates (e.g., in a similar manner as for ITMP mode).

One or more examples described herein may be used as part of inter prediction where motion vectors are utilized. The chained motion vector prediction (CMVP) candidates may be introduced as a merge candidate (e.g., one of merge candidates) and/or may be inserted after HMVP candidates for (e.g., regular) merge and/or TM merge modes. The CMVP may be similar to AR-BVP, and/or CMVP candidates may be derived as the accumulation of the recursively traced MVs and BVs based on the pre-derived MVs. CMVP candidates may be derived for a (e.g., each) merge index and/or a (e.g., each) reference picture list. The traceable reference pictures may be (e.g., may be restricted to) the reference pictures in the reference picture list.

History-based lists may be used.

To utilize coding information (e.g., MVs, BVs, affine model parameters, CCP models, extrapolation filter-based intra prediction (EIP) mode parameters, and/or the like) of previously coded blocks (e.g., which may not be neighboring blocks to the current block), a history-based table, buffer, and/or a list may be maintained at a device (e.g., at the encoder and/or decoder).

History-based motion vector prediction (HMVP) may be used for coding.

A history-based list may be provided for motion-vectors. Motion vectors from the list may be used as candidates if/when constructing inter-merge and/or inter-AMVP candidates list. The motion information of a previously coded block may be stored in a table (e.g., HMVP table, list, and/or buffer) and/or used as predictors for the current CU. The HMVP merge candidates may be added to merge candidates after the spatial motion vector predictor (MVP) and/or the temporal MVP (TMVP). The motion information of a previously coded block may be stored in a table and/or used as MVP for the current CU. The table with one or more HMVP candidates may be maintained during the encoding/decoding operation. The table may be reset (e.g., emptied) if/when a (e.g., new) CTU row is encountered. If/when a non-subblock inter-coded CU exists, the associated motion information may be added to an entry (e.g., the last entry) of the table as a (e.g., new) HMVP candidate.

If a (e.g., new) motion candidate is inserted into the table, a redundancy check may be (e.g., firstly) applied to determine if/whether there is a similar (e.g., an identical) HMVP in the table. If a similar HMVP is found, the (e.g., identical) HMVP may be removed from the table, (e.g., all) the HMVP candidates (e.g., afterwards) may be moved forward, and/or the (e.g., new) identical HMVP may be inserted to an entry (e.g., the last entry) of the table.

HMVP candidates may be used in the merge candidate and/or AMVP candidate list construction. The HMVP candidates (e.g., the latest several HMVP candidates) in the table may be checked in order and/or inserted to the candidate list.

HMVP in IBC and/or ITMP may be described used for coding.

BV-based prediction modes, where a history-based BV table may be maintained, is described herein. BVs may be used as merge candidates. For example, an HMVP list may be maintained and/or used in IBC and/or an ITMP mode (e.g., BVs of an HMVP list may be used in IBC mode and/or in ITMP mode). BVs may be used in one or more prediction modes that use BV-based prediction to extend merge candidates by using more BVs (e.g., by using one or more prediction modes described herein).

For a BV-based history list, IBC and/or ITMP BVs may be inserted into a history buffer for future referencing. A (e.g., separate) HMVP buffer may be used for MV and BV.

In ITMP, ITMP merge candidates may be added by using the block vectors from an HMVP list (e.g., similar to IBC). An ITMP BV may be stored in an HMVP.

One or more (e.g., up to 25) BVs may be stored in an HMVP BV list. One or more BVs may be used as (e.g., additional) merge candidates in (e.g., several) prediction modes that utilize BVs to create prediction. For example, an HMVP candidate (e.g., the latest several HMVP BV candidates) in the table may be checked (e.g., identified) and/or inserted into the merge candidates. One or more block vectors (e.g., up to 25 BVs) may be selected to reduce complexity. An HMVP list may be organized as a last-in-first-out (LIFO) list, where recently added BVs may be used (e.g., tested) first (e.g., since it may be assumed that they are more corelated with the current block).

For example, a subset of (e.g., all available) BVs in the HMVP list may be used (e.g., due to the complexity reasons).The subset of the candidates may be used if/when creating merge list. For example, ITMP may test the last N of the BVs (e.g., the last N out of 25 BVs). Testing BVs from HMVP may be early terminated (e.g., if the merge list reaches a maximum allowed size before testing (e.g., all) available BVs). Early termination may occur in IBC AMVP and/or merge if/when HMVP candidates are used. In (e.g., all) examples, BVs are taken (e.g., selected) from the top of the list (e.g., meaning that the most recent (e.g., recently added) candidates are used first, such as in a LIFO based list).

ITMP may employ an implicit merge mode, where merge candidates may be considered without signaling a merge flag or index. The reference positions pointed by the block vectors of (e.g., all) the merge candidates may be used as additional candidates beyond the default search areas. Merge BV candidates (e.g., including candidates from neighboring blocks, AR-BVP, and/or HMVP candidates) may be extended to other prediction modes, such as DIMD, TIMD, SGPM, and/or the like.

Using (e.g., additional) merge candidates may be applied to a prediction mode that uses BV-based prediction. Utilizing HMVP BV-candidates may be applied to one or more (e.g., several) modes that profit from BV-based prediction.

In addition to IBC and ITMP modes, the BV based prediction may be used in combination with directional prediction. BV based prediction may be used with SGPM and/or BV based prediction may be used with DIMD. In both modes (e.g., SGPM and DIMD), the merge candidates may be evaluated with the template cost to select at least one BV predictor to be combined with the directional modes.

When DIMD is applied, one or more (e.g., up to five) intra modes may be derived from the reconstructed neighbor samples, and/or predictors (e.g., those five predictors) may be combined with the non-directional predictor (e.g., planar or BV based predictor) with the weights derived from the histogram of gradients. Merge candidates may be compared to planar prediction on the reconstructed template. The template cost (SATD) may be used to select the optimal (e.g., best) predictor.

For an (e.g., each) intra prediction mode in a most-probable-mode list, and/or for the wide-angle modes if the above-right and/or bottom-left reference samples are available, a SATD between the prediction and/or reconstruction samples of the template may be calculated. In examples, one or more (e.g., two) intra prediction modes with the minimum SATD and/or one non-angular intra prediction modes (e.g., DC or planar) with the lowest SATD cost may be selected as the TIMD modes. TIMD may (e.g., further) benefit from the block vector prediction in a similar manner as SGPM and/or DIMD modes. One or more fusion modes (e.g., of the three fusion modes) of TIMD may be replaced by a BV-based prediction, where a BV may be selected from the merge candidates based on the template cost.

Combined intra-inter prediction (CIIP) extension with intra template matching may be an extension to CIIP to replace the inter-prediction part by the BV. CIIP extension with intra template matching may enable CIIP with intra prediction (e.g., only), and/or allow CIIP in I-slices. CIIP mode may combine intra prediction (e.g., like angular intra modes) with a BV-based prediction. If/when CIIP is selected, inter and/or intra predictions may be combined by (e.g., predefined) weights that depend on a prediction type of the neighboring blocks. CIIP (e.g., that may include inter prediction) may be applied to non-I slices. CIIP with intra (e.g., only) prediction may include replacing the inter-part by a similar intra prediction operation such as BV-based prediction. CIIP may be expanded to provide coding gains to intra slices as well as intra coded blocks. For example, one or more BV candidates from ITMP may be considered and/or an index may be signaled to a device (e.g., the decoder) to indicate which candidate may be used. A fusion of one or more candidates may be described herein. A (e.g., new) mode, named spatial CIIP or intra CIIP may be signaled inside the intra prediction syntax. Spatial CIIP or intra CIIP mode may use similar functionality as CIIP (e.g., except that the inter part may be replaced by BV-based prediction). The intra part may not be changed, as and the computation of weights may be unchanged.

Intra CIIP may be described herein. Intra CIIP may employ the existing CIIP operation for intra-coded CU's. CIIP may be an inter prediction mode, where the motion compensated prediction may be blended with intra prediction. The TIMD derivation may be used to derive the intra prediction mode.

Intra CIIP may be an independent intra mode and/or signaled at CU level. Intra CIIP may be added as a mode of ITMP. A syntax element (e.g., named IntraCiipFlag), may be signaled as a sub-mode of ITMP. Intra CIIP may be allowed if/when ITMP fusion, ITMP filtering, and/or ITMP sub-pel are not applied. Intra CIIP may be a (e.g., new) sub-mode of ITMP, different from ITMP fusion, and/or may be used if/when ITMP fusion is not used.

One or more history-based lists may be used for coding.

A cross-component prediction (CCP) history-based list is described herein.

Non-local CCP and CCP-merge mode is described herein. For chroma coding, a flag may be signaled to indicate if/whether CCP mode (e.g., including the cross-component linear model (CCLM), cross-component chroma mapping (CCCM), generalized linear model (GLM) and the like), or non-CCP mode (e.g., a chroma intra prediction mode, fusion of chroma intra prediction mode, and/or the like) may be used. If the CCP mode is selected, one more flags may be signaled to indicate how to derive the CCP type and parameters (e.g., either from a CCP merge list or signaled/derived on-the-fly). A CCP merge candidate list may be constructed from the spatial adjacent, temporal, spatial non-adjacent, history-based, or shifted temporal candidates. Default models may be (e.g., further) included to fill the remaining empty positions in the merge list (e.g., after including the CCP merge candidates).

To remove redundant CCP models in the list, a pruning operation may be applied. After constructing the list, the CCP models in the list may be reordered depending on the SAD costs, which may be obtained using the neighboring template of the current block (e.g., after constructing the list). The positions and/or inclusion order of the spatial adjacent and/or non-adjacent candidates may be similar to and/or the same as those in inter merge prediction candidates. Temporal candidates may be selected from the collocated picture. The position and/or inclusion order of the temporal candidates may be similar to and/or the same as those in inter merge prediction candidates. The shifted temporal candidates may be selected from the collocated picture. The position of temporal candidates may be shifted by a selected motion vector that may be derived from motion vectors of neighboring blocks. A history-based table may be maintained to include used CCP models (e.g., the recently used CCP models), and/or the table may be reset at the beginning of a (e.g., each) CTU row. If the (e.g., current) list is not full after including spatial adjacent and/or non-adjacent candidates, the CCP models in the history-based table may be added into the list. History-based information of the CCP mode may be maintained in the history buffer and/or list.

A EIP history-based list may be used for coding.

EIP parameters may be stored in an EIP history-based buffer for (e.g., future) use. Inheritance of the EIP filters may be performed in the EIP merge mode. The filter shape and/or the filter coefficients may be inherited from decoded blocks (e.g., the previous decoded blocks) with EIP or EIP merge mode. The decoder may decode an EIP merge flag to determine if/whether the proposed merge mode is used if/when the current block uses the EIP mode. A merge index may be (e.g., further) decoded if/when the EIP merge flag is true. The EIP merge list may include spatial adjacent and/or non-adjacent candidates, temporal candidates, and/or history candidates. The constructed EIP merge list may include one or more candidates (e.g., up to 12 candidates) and/or the list may be reduced (e.g., to up to 6 candidates) by the reordering operation based on the SAD cost (e.g., measured on a 1 column and 1 row template). In the SAD calculation, predictions of the template area by EIP filters may be generated from reconstructed (e.g., neighboring and template) samples, allowing the EIP filters to be applied in parallel rather than sequentially. The positions and inclusion order of the spatial adjacent, temporal, non-adjacent, shifted temporal, and/or history candidates may be similar and/or the same as those described for the CCP merge prediction candidates.

One or more (e.g., several) history-based lists may be provided.

A list may be, for example, an HMVP list used to store BVs that may (e.g., later) be used as merge candidates in prediction modes that utilize BV-based prediction. One or more (e.g., up to 25) BVs may be stored in an HMVP list. One or more BVs may be used as (e.g., additional) merge candidates in (e.g., several) prediction modes that utilize BVs to create prediction(s). HMVP BV candidates may be used in IBC and/or ITMP (e.g., as additional merge BVs).

One or more candidates from the history-based list may not be used. One or more candidates may not be used to reduce complexity. If/when a portion of the candidates (e.g., not all candidates) are used, a history-based list may be organized as a LIFO list (e.g., the recently added candidates may be used (e.g., tested) first since they may be corelated with the current block). Candidates that are not recent candidates may be utilized. The diversity of merge candidates may be improved, which may lead to the optimized coding performance (e.g., if previous candidates are added instead of and/or in addition to the most recent candidates). In examples, the diversity of merge candidates (e.g., a list of merge candidates) may be improved when candidates are from one or more portions of a picture, when the probability that one or more candidates are different increase, and/or the like. In ITMP mode, diverse merge candidates may lead to optimized coding performance (e.g., when previous candidates are added instead of and/or in addition to the most recent candidates).

Examples described herein are related to constructing merge candidates (e.g., coding vectors, including BVs and/or MVs) by using a history-based list. Examples described herein may diversify merge candidates by utilizing a history-based list.

Examples described herein are provided for ITMP mode and/or an HMVP BV list (e.g., and/or one or more coding modes described herein).

Using history-based lists as a first-in-first-out (FIFO) instead of a LIFO may be described herein.

In examples, a history-based list may be used as a FIFO list. The candidates (e.g., coding vectors, including BVs and/or MVs) that are first added to the history-based list may be first used if/when obtaining (e.g., fetching) a merge candidate from the history list. In examples, a first set of candidates that precede a second set of candidates in a history-based list may be utilized before the second set of candidates (e.g., the first set of candidates and/or a first candidate may be added to a merge candidate before the second set of candidates and/or before a second candidate). In examples, older candidates may be used first, which may increase diversity among (e.g., potential) candidates (e.g., which may lead to optimized coding performance).

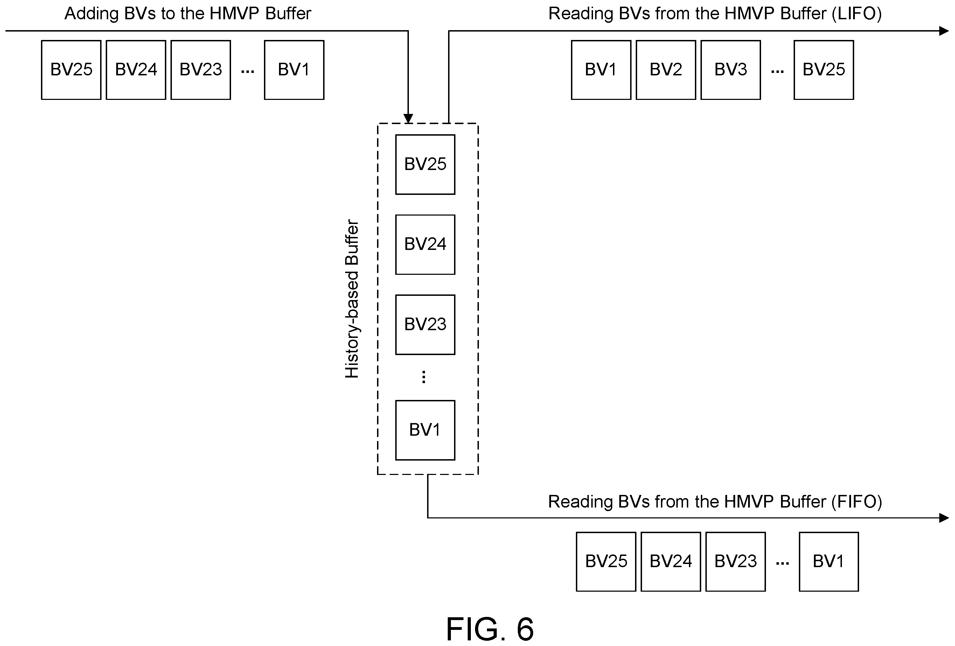

Examples described herein may reference a ITMP and/or an HMVP BV list. An HMVP buffer may store BVs (e.g., up to 25 BVs). A subset of the BVs (e.g., a subset of the 25 BVs) may be tested and/or (e.g., potentially) added to the ITMP merge list. In examples, BV1 may be the first added BV to the history-based buffer, and BV2 may be the second, and BV25 may be the most recent BV added to the history buffer. FIG. 6 illustrates an example of a history-based list utilized as a FIFO list and a LIFO list. If/when an HMVP list is used, the candidates may be read from the bottom (e.g., or selected from one or more of the earliest added candidates) of the list (e.g., FIFO), as the candidates (e.g., the earliest added candidates) may improve the diversity. In examples, a LIFO may be considered where more recent candidates (e.g., one or more recently added candidates) may better reflect the (e.g., current) block statistics. Although FIG. 6 illustrates a FIFO and LIFO for BVs, this is not meant to be limiting as a buffer may include coding vectors (e.g., BVs, MVs, and/or the like).

Using older candidates (e.g., one or more of the earlier added candidates, including one or more coding vectors, that are from distant blocks), may improve the performance. Usage of the history list and/or obtaining candidates from the history list may be modified for one or more coding modes (e.g., in ITMP mode, and/or the like). The history list may be a FIFO list where the longest standing candidates (e.g., one or more of the earlier added candidates) are given higher priority (e.g., the last candidate may be selected and/or tested first).

Using more distant BVs (e.g., one or more earlier candidates) compared to (e.g., already) existing candidates may be described herein.

In examples, one or more of the candidates (e.g., all the candidates) from the history-based list of candidates may be checked (e.g., tested), and/or a determination whether to (e.g., further) use the candidate may be based on a metric. A pre-selection of a history-based candidate(s) may be performed (e.g., first).

A pre-selection may be performed, for example, based on the distance of a coding vector (e.g., a BV or an MV from the history list) to an (e.g., already) existing coding vector candidate(s). If the history-based candidate satisfies a threshold (e.g., is within a distance threshold compared to the existing candidate), the history-based candidate may be used (e.g., further). Otherwise, if the history-based candidate does not satisfy the threshold (e.g., the history-based candidate exceeds the distance threshold), the history-based candidate may not be used in a merge operation (e.g., not included in a merge candidate list).

In examples, a pre-selection may be performed as described herein. History-based candidates may be re-ordered based on a metric and/or a subset of the history-based candidates may be used (e.g., after re-ordering. For example, a BV from a history-based list may be re-ordered based on a distance to a BV (e.g., a distance to the closest already existing BV). In examples, a BV (e.g., a closest existing BV) to a BV from the history-based list may be identified. A distance between at least two BVs may be used as a metric to reorder a BV in the history-based list. Based on the re-ordering (e.g., only) the candidates that are the most distant compared to the existing candidates are used (e.g., candidates that satisfy a threshold, including BVs that include a distance that exceeds a distance threshold may be used). Determining BVs based on a pre-selection may improve diversity of the candidates and/or improve the performance. Examples described herein use BVs, however this is not meant to be limiting as coding vectors, including BVs and/or MVs may be used interchangeably.

In examples, pre-selection may be performed based on the position of a BV from the history-based list relative to an ITMP search region(s). In examples, if the BV is within a ITMP search region(s), the BV may be excluded from use (e.g., the BV may be excluded from further use in a merge candidate list). Otherwise, if the BV is out of the ITMP search region, the BV may be used (e.g., added form HMVP to the merge list). Examples described herein use BVs, however this is not meant to be limiting as coding vectors, including BVs and/or MVs may be used interchangeably.

Modifying the operation of creating the list may be described herein.

Examples of how history-based list are created and/or maintained may be described herein. If/when a first (e.g., new) candidate (e.g., a coding vector) is to be added to the history buffer, the first candidate may be tested to determine if the first candidate already exists. If the first candidate exists: the existing candidate (e.g., the first candidate) may be removed from the list; a second candidate and/or a set of (e.g., other) candidates may be shifted accordingly; and/or the first (e.g., new) candidate may be added to the top of the list.

In examples, the candidate may be checked to determine if the candidate (e.g., already) exists in the history buffer. If the candidate exists, the history-based list may be kept as is, and/or the (e.g., new) candidate may be discarded. In examples, older candidate(s) (e.g., still at the bottom of the list) may be preferred.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. Intemational Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A device for video decoding, the device comprising:
a processor configured to:
generate a history-based list based on a plurality of coding vectors;
select a coding vector from the plurality of coding vectors to be added to a merge candidate list, wherein the coding vector is an earliest-added coding vector in the history-based list;
construct a merge candidate list based at least on the selected coding vector from the history-based list;
select at least one coding vector from the merge candidate list; and
decode a current block based on the selected at least one coding vector from the merge candidate list.

2. The device of claim 1, wherein the plurality of coding vectors comprise at least one of motion vectors (MV) or a block vectors (BV), and wherein the plurality of coding vectors are derived from at least one of an intra-block copy (IBC), an intra-template matching prediction (ITMP), a decoder-side intra mode derivation (DIMD), a spatial geometric partition mode (SGPM), an advanced motion vector prediction (AMVP), a chained motion vector prediction (CMVP), a spatial motion vector predictor (SMVP), or a temporal motion vector predictor (TMVP).

3. The device of claim 1 or 2, wherein the processor is further configured to:
select a subset of coding vectors from the plurality of coding vectors, wherein the subset of coding vectors comprises the coding vector; and
construct the merge candidate list by storing the subset of coding vectors first in the merge candidate list.

4. The device of any one of claims 1-3, wherein the merge candidate list further comprises a spatial adjacent candidate, a spatial non-adjacent candidate, or a history based temporal candidate.

5. The device of any one of claims 1-4, wherein the merge candidate list is constructed further based on at least one of: spatial adjacent coding candidates, temporal coding candidates, spatial non-adjacent coding candidates, or shifted temporal coding candidates.

6. The device of any one of claims 1-5, wherein the merge candidate list is constructed further based on the coding vector being tested first.

7. The device of any one of claims 1-6, wherein the merge candidate list comprises the coding vector, and wherein the coding vector diversifies the merge candidate list.

8. A video decoding method comprising:
generating a history-based list based on a plurality of coding vectors;
selecting a coding vector from the plurality of coding vectors to be added to a merge candidate list, wherein the coding vector is an earliest-added coding vector in the history-based list;
constructing a merge candidate list based at least on the selected coding vector from the history-based list;
selecting at least one coding vector from the merge candidate list; and
decoding a current block based on the selected at least one coding vector from the merge candidate list.

9. The method of claim 8, wherein the plurality of coding vectors comprise at least one of motion vectors (MV) or a block vectors (BV), and wherein the plurality of coding vectors are derived from at least one of an intra-block copy (IBC), an intra-template matching prediction (ITMP), a decoder-side intra mode derivation (DIMD), a spatial geometric partition mode (SGPM), an advanced motion vector prediction (AMVP), a chained motion vector prediction (CMVP), a spatial motion vector predictor (SMVP), or a temporal motion vector predictor (TMVP).

10. The method of claim 8 or 9, wherein the method further comprises:
selecting a subset of coding vectors from the plurality of coding vectors, wherein the subset of coding vectors comprises the coding vector; and
constructing the merge candidate list by storing the subset of coding vectors first in the merge candidate list.

11. The method of any one of claims 8-10, wherein the merge candidate list further comprises a spatial adjacent candidate, a spatial non-adjacent candidate, or a history based temporal candidate.

12. The method of any one of claims 8-11, wherein the merge candidate list is constructed further based on at least one of: spatial adjacent coding candidates, temporal coding candidates, spatial non-adjacent coding candidates, or shifted temporal coding candidates.

13. The method of any one of claims 8-12, wherein the merge candidate list is constructed further based on the coding vector being tested first.

14. The method of any one of claims 8-13, wherein the merge candidate list comprises the coding vector, and wherein the coding vector diversifies the merge candidate list.

15. A computer readable medium including instructions for causing one or more processors to perform the method of any one of claims 8-14.
